(19) Europäisches Patentamt
European Patent Office
Office européen des brevets

(11) **EP 4 057 707 B1**

(12) **EUROPEAN PATENT SPECIFICATION**

(45) Date of publication and mention
of the grant of the patent:
**14.02.2024 Bulletin 2024/07**

(21) Application number: **22161594.1**

(22) Date of filing: **11.03.2022**

(51) International Patent Classification (IPC):
*H04W 52/14* (2009.01)    *H04W 52/22* (2009.01)

(52) Cooperative Patent Classification (CPC):
**H04W 52/143; H04W 52/223; H04W 52/228**

(54) **METHOD FOR CONTROLLING THE AVERAGE POWER TRANSMITTED BY A BASE RADIO STATION**

VERFAHREN ZUR STEUERUNG DER VON EINER FUNKBASISSTATION ÜBERTRAGEN DURCHSCHNITTLICHEN LEISTUNG

PROCÉDÉ DE COMMANDE DE PUISSANCE MOYENNE TRANSMISE PAR UNE STATION DE BASE RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2021 IT 202100005774**

(43) Date of publication of application:
**14.09.2022 Bulletin 2022/37**

(73) Proprietor: **Vodafone Italia S.p.A.**
**10015 Ivrea (TO) (IT)**

(72) Inventors:
• **D'Elia, Stefano**
**10015 Ivrea TO (IT)**
• **Deiana, Massimiliano**
**10015 Ivrea TO (IT)**
• **Fragola, Alessandro**
**10015 Ivrea TO (IT)**
• **Goia, Alessandro**
**10015 Ivrea TO (IT)**
• **Landi, Marco**
**10015 Ivrea TO (IT)**
• **Suman, Riccardo**
**10015 Ivrea TO (IT)**
• **Marfisi, Riccardo**
**10015 Ivrea TO (IT)**

(74) Representative: **Perani & Partners S.p.A.**
**Piazza Armando Diaz, 7**
**20123 Milano (IT)**

(56) References cited:
**WO-A1-2018/002691     WO-A1-2020/239214**

**Description**

*FIELD OF APPLICATION*

The present invention relates to a method for controlling the average power transmitted by a base radio station using a predictive approach.

Specifically, the method offers an aid to mobile radio network operators that allows for greater efficiency, both in management and in their deployment, allowing for a benefit in the service offered against a stricter process for complying with limits on exposure to electromagnetic fields.

*Description of the prior art*

Mobile network operators must provide regulators with information on the average power transmitted by base radio stations to ensure adequate monitoring of exposure to radio frequency electromagnetic fields. The warning value and quality objective thresholds of 6V/m must be compared with 24-hour average values. The mobile operator must then collect the data from the radio meters of the average power transmitted by the base radio stations and report them, in accordance with the methodology and timing required by the regulator. Should the mobile operator find that the average power transmitted in the 24-hour period has been exceeded, it must always carry out a power reduction on the base station that has exceeded the threshold value, in order to ensure compliance with the parameters.

The traditional approach is to simply monitor and report on the power transmitted by the base radio stations. The configuration and optimization of the networks is carried out through manual actions on the parameters and on the network nodes, to be performed periodically or in any case according to the needs dictated by the traffic situation with respect to a given time period.

In order to cope with the increasing complexity of mobile network management, standardization bodies have introduced the concept of SONs (Self-Organizing Networks), to enable the automation of part of the configuration and optimization processes of mobile radio networks, allowing mobile operators to save on network deployment/optimization costs and time, reducing manual tasks and offering a higher level of service quality to users.

The main application cases of SONs fall into three main families:

- Self-configuration: for automatic ("plug and play") procedures for configuring network nodes;
- Self-optimization: for automatic and real-time procedures for optimizing nodes and network parameters;
- Self-healing: to react in real time to faults/failures on the network.

The reference documents for the above-described prior art are the publications: i) "Evoluzione della normativa sui campi electromagnetici", S. D'Elia, R. Suman & M. Zangani, Rivista dell'AEIT (Associazione Elettro Tecnica Italiana), no. 3, March 2014; and ii) "Evidenze sperimentali sul coefficiente di riduzione della potenza previsto dal D.Lgs 179/12 e dalla guida CEI 211-7/E", S. D'Elia, R. Suman, Proceedings of the XXXVII AIRP National Conference "Le radiazioni: valori, conoscenza scientifica e aspetti operativi", Aosta, 15-17 October 2014.

A method for controlling the energy efficiency of a base radio station is described in document WO 2020/239214 A1, and a method for controlling the average transmission power of a base radio station is described in document WO 2018/002691 A1.

*Problem of the prior art*

In the prior art, the information of the actual daily power transmitted by a base radio station is available at the earliest the next day, i.e. after 24:00 each day, when the possible passing of the threshold has already taken place and any resolution and/or mitigation action can only take place later and in any case in the days following the event. Any passing of the authorised daily power parameter could expose the mobile operator to possible measures by the competent authorities, although it does not automatically imply overexposure to electromagnetic fields, since power is only one of the parameters contributing to the determination of the overall value of the radiated field. In addition, the limits set for the protection of the public from exposure to electromagnetic fields refer to the total contribution of all sources making their effect felt at a given point in space.

In addition, any adjustment of the transmitted power of a base radio station involves manual action on the configuration of the base radio station itself. This configuration action involves a high operational load in terms of time and resources for the mobile operator. In fact, this type of approach, applied to increasingly complex and extensive mobile networks such as 4G and 5G, results in inefficient management of the configuration and optimization processes of these networks.

Known methods are partially automated and have proven to be unsuitable for the increasing traffic demands of the new 4G and 5G networks.

*SUMMARY OF THE INVENTION*

The aim of the present invention is to realise a method for controlling the average power transmitted by a base radio station which overcomes the drawbacks of the prior art by exploiting the SON paradigm.

*Advantages of the invention*

Thanks to one embodiment, it is possible to obtain a method for monitoring the average power transmitted by a base radio station using a predictive approach that allows the electromagnetic field emitted by a base radio station to be assessed as a 24-hour average by measuring the average power transmitted by the base radio station over a day, i.e. from 00:00 to 24:00.

Thanks one embodiment, it is possible to implement a method that ensures an increase in the productivity and efficiency of all the main management and optimization activities on mobile radio networks.

Thanks one embodiment, it is possible to implement a method for controlling the power transmitted by base radio stations in real time by means of effective and automatic actions on a large number of base radio stations.

*BRIEF DESCRIPTION OF THE DRA WINGS*

The characteristics and advantages of the present invention will become clear from the following detailed description of a possible practical embodiment, illustrated by way of non-limiting example in the set of drawings, wherein:

- figure 1 shows a graph of an example of the trend of the power transmitted by a base radio station according to the prior art, without using the method of the present invention,
- figure 2 shows a graph in accordance with the example of figure 1, in which the trend of the power transmitted by a base radio station when using the method of the present invention is also shown,
- figure 3 shows a first detailed aspect of the graph of figure 2,
- figure 4 shows a second detailed aspect of the graph of figure 2,
- figure 5 shows a third detailed aspect of the graph of figure 2.

*DETAILED DESCRIPTION*

Even when not explicitly highlighted, the individual features described with reference to the specific embodiments must be considered as accessories and/or exchangeable with other features, described with reference to other embodiments.

The present invention relates to a method of controlling the average power transmitted by a base radio station of a mobile network using a predictive approach, preferably through the use of machine learning/artificial intelligence techniques. In this description the method for controlling a single base radio station is described. It should be noted, however, that the method of the present invention can be applied simultaneously to control the power transmitted by a large number of base radio stations in the mobile network.

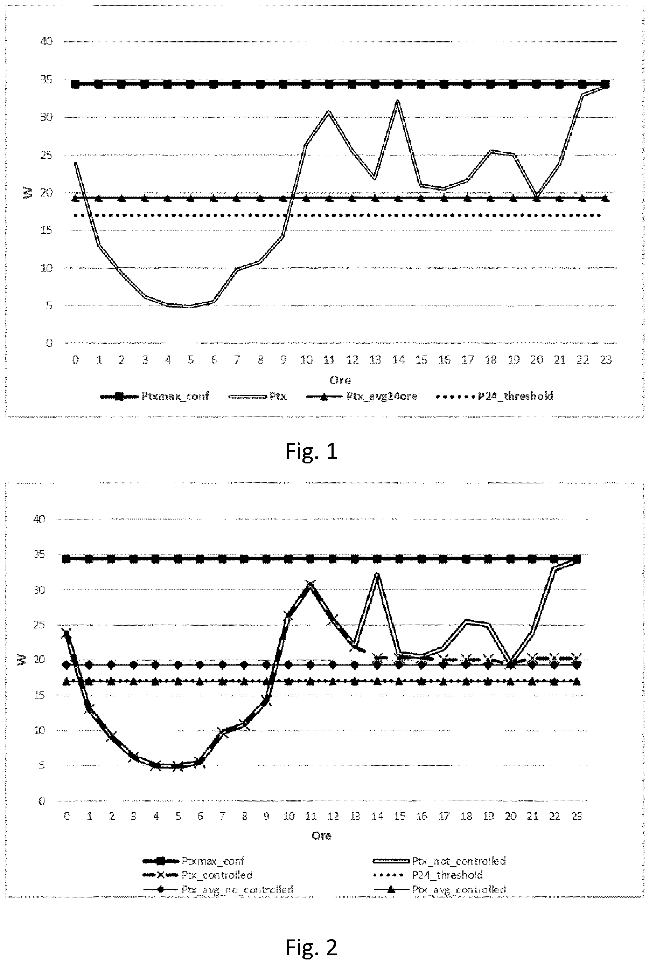

With reference to the above-mentioned prior art, figure 1 shows the trend of the power transmitted by a non-power-controlled base radio station with the exceeding of the average transmitted power over 24 hours, i.e. over the course of a day. Ptxmax_conf is the maximum instantaneous power value that can be transmitted by the base radio station. P24_threshold indicates the preset average daily power threshold value for the base radio station under analysis. Ptx is the power value actually transmitted by the base radio station during the day. Ptx_avg24hours is the average power value actually transmitted by the base radio station over 24 hours.

From the graph in figure 1, it is possible to note that the power value Ptx actually transmitted by the base radio station during the day, if not subjected to control in accordance with the present invention, could produce at the end of the day an excess of the average power value actually transmitted by the base radio station over 24 hours Ptx_avg24hours. This excess is therefore only evident at the end of the day, and can therefore only be prevented for the following day, following intervention by technicians.

Accordingly, the method for monitoring the average power transmitted by a base radio station of a mobile network of the present invention comprises step of a) acquiring and processing the power value actually transmitted by the base radio station Ptxavg_24hour_transmitted and traffic data of the base radio station, both at a plurality of time instants during each elapsed day, to generate and store historical data. In other words, these parameters are collected throughout the day so that they can be monitored.

The method to control the average power transmitted by a base radio station of a mobile network includes step b) of providing a maximum threshold value of daily average power P24_threshold transmissible by the base radio station.

In this description, for simplicity and in accordance with the way conventional mobile networks are operated, reference is made to a daily time frame, i.e. a standard 24-hour day. However, it should be noted that the method of the present invention is also applicable if time intervals of different lengths are considered.

The method of controlling the average power transmitted by a base radio station of a mobile network comprises step c) providing an algorithm to control the transmitted power, referred to as a "power watcher" algorithm within the scope of the present invention. According to the preferred embodiment of the invention, the Power Watcher algorithm employs machine learning/artificial intelligence techniques. Preferably, the Power Watcher algorithm resides in a processing unit placed in signal communication with each monitored base radio station. Preferably, a memory unit is associated with the processing unit to store the data collected and processed by the Power Watcher algorithm.

The method for monitoring the average power transmitted by a base radio station of a mobile network comprises step d) of detecting by means of the Power Watcher algorithm the value of average and cumulative power actually transmitted by the base radio station Ptxavg_24ore_transmitted in real time starting from the time instant of the beginning of the current day, preferably from 00:00 hours of the current day until the time instant of real time detection (as better specified in step f). Within the scope of the present invention, the term "real-time" refers to a current, present time instant at which an instantaneous measurement of a given parameter is performed.

The method for monitoring the average power transmitted by a base radio station of a mobile network, includes step e) of processing by means of the Power Watcher algorithm the historical data and the value of the average and cumulative power actually transmitted by the base radio station Ptxavg_24hour_transmitted in real time, in order to calculate an estimated value of the average and cumulative power (sum of the instantaneous powers) that will be transmitted by the base radio station during the rest of the day Ptx_estimated (i.e. from detection until 24:00 of the current day) according to the trend of the historical data. Within the scope of the present invention, the term "rest of the day" refers to the time period between the present instant of real time detection and the end of the current day (24:00).

Preferably, the method for monitoring the average power transmitted by a base radio station of a mobile network comprises step f) of calculating by means of the Power Watcher algorithm the average and cumulative power value (sum of the instantaneous transmitted powers) actually transmitted by the base radio station Ptxavg_24ore_transmitted up to the time instant of real time detection, i.e. from the beginning of the day (00:00) up to the current time instant of real time detection.

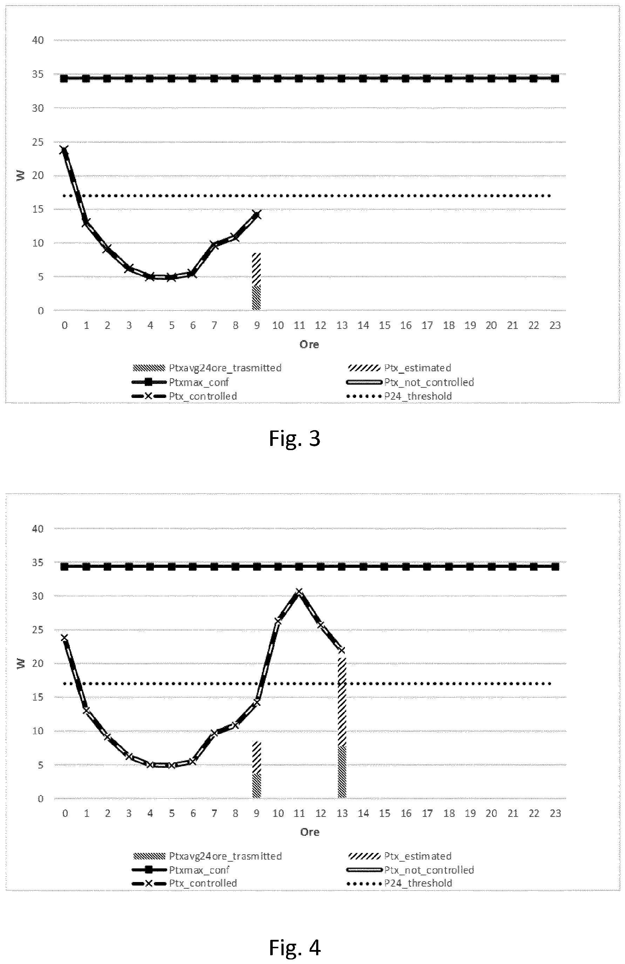

With reference to Figure 4, the method for controlling the average power transmitted by a base radio station of a mobile network includes step g) of limiting by means of the Power Watcher algorithm the power transmitted by the base radio station in the rest of the day when the sum of the estimated value of the power that will be transmitted by the base radio station in the rest of the day Ptx_estimated with the power value actually transmitted by the base radio station Ptxavg_24hours_transmitted until the time instant of real time detection (13:00 in the example) exceeds the maximum daily average power threshold value P24_threshold, i.e. when:

$$Ptxavg\_24ore\_trasmitted + Ptx\_estimated > P24\_threshold.$$

According to a preferred embodiment of the invention, step g) of limiting by means of the Power Watcher algorithm the power transmitted by the base radio station in the rest of the day comprises the sub-step of limiting the power transmitted by the base radio station in the rest of the day so that the maximum daily average power threshold value P24_threshold in the rest of the day is not exceeded after the real-time detection time instant. In this respect, reference is made to the example of figure 2 wherein a graph is provided showing the trend of the power that would be transmitted by the base radio station over a 24-hour period without the use of the method of the present invention Ptx_not_controlled. As shown in Figure 1, this uncontrolled power trend could lead to the maximum daily average power threshold P24_threshold that can be transmitted by the base radio station being exceeded. In contrast, the trend of the power transmitted by the base radio station using the control method according to the present invention Ptx_controlled (dashed in figure 2) shows how it is possible to keep the daily average power transmitted by the base radio station Ptx_avg_controlled below, or as in the example limit case in line with, the maximum daily average power threshold value P24_threshold transmissible by the base radio station or (superimposed on the Ptx_avg_controlled in figure 2).

In accordance with a preferred embodiment of the invention, step d) of detecting by means of the Power Watcher algorithm the value of average and cumulative power actually transmitted by the base radio station Ptxavg_24ore_transmitted in real time, comprises the sub-step of detecting the traffic of the base radio station in real time. Furthermore, step e) of processing by the Power Watcher algorithm historical data and the value of the average and cumulative power actually transmitted by the base radio station Ptxavg_24hour_transmitted in real time, comprises the sub-step of processing also data relative to the base radio station traffic detected in real time to calculate the estimated value of the power which will be transmitted by the base radio station during the rest of the day Ptx_estimated also according to the traffic of the base radio station in real time, and as a function of the historical data.

In accordance with a preferred embodiment, and with reference to the graph in Figure 3, the method for controlling the average power transmitted by a base radio station of a mobile network comprises step h) of leaving unchanged by the Power Watcher algorithm the power transmitted by the base radio station when the sum of the estimated value of the power that will be transmitted by the base radio station during the rest of the day Ptx_estimated with the power value actually transmitted by the base radio station Ptxavg_24ore_transmitted until the time instant of real time detection (09:00 in the example) is less than, or at most equal to, the maximum daily average power threshold value P24_threshold:

$$Ptxavg\_24ore\_trasmitted + Ptx\_estimated \leq P24\_threshold.$$

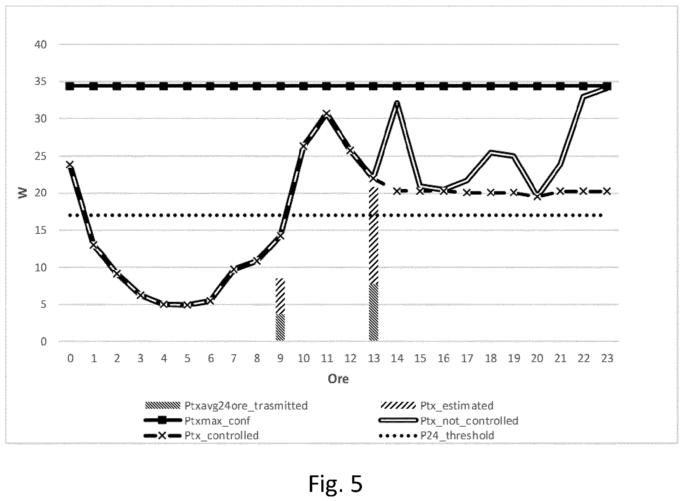

With reference to the graph in figure 5, the method of the present invention automatically adjusts the power transmitted by the base radio station during the rest of the day (from 13:00 to 24:00 in the example) to ensure compliance with the daily threshold. The limitation of transmissible power from the base radio station is constantly adjusted by the Power-Watcher algorithm during the rest of the day according to the actual traffic trend and the actual transmitted power and remains active until the algorithm determines that the average transmitted power for the entire day (00:00 to 24:00) no longer exceeds the permitted threshold. Therefore, the example in figure 5 shows the trend of the power transmitted by the base radio station adjusted by the Power-Watcher algorithm to ensure compliance with the daily average transmittable power threshold P24_threshold.

In accordance with a preferred embodiment, the method for controlling the average power transmitted by a base radio station of a mobile network comprises step l) of recursively repeating steps d) to i).

In accordance with a preferred embodiment, the method for controlling the average power transmitted by a base radio station of a network comprises step m) of resetting the power value actually transmitted by the base radio station Ptxavg_24ore_transmitted at the beginning of each day.

In accordance with a preferred embodiment, the method for controlling the average power transmitted by a base radio station of a mobile network comprises the step of repeating step i) until the end of the day.

In accordance with a preferred embodiment, the method for controlling the average power transmitted by a base radio station of a mobile network comprises the step of providing a value of maximum instantaneous power transmittable by the base radio station Ptxmax_conf. In addition, the method comprises the step of limiting by means of the Power Watcher algorithm the power transmitted instantaneously by the base radio station if the value of the average and cumulative power actually transmitted by the base radio station Ptxavg_24hour_transmitted in real time is greater than or equal to the value of the maximum instantaneous power transmissible by the base radio station Ptxmax_conf.

Advantageously, the method of the present invention makes it possible to automatically regulate the power transmissible by the base radio stations throughout the day, i.e. from 00:00 to 24:00, ensuring compliance with the maximum permitted average power threshold and avoiding the need to intervene later and manually on the configuration of the base radio station. The method can act on the transmitted power of any base radio station of any known technology, such as LTE, 5G, NR.

In fact, for each base radio station, the method involves constantly monitoring the actual power transmitted throughout the day and determining the power that will be transmitted throughout the day from 00:00 to 24:00, predicting on the basis of the traffic and power trend, the power that will be transmitted in the remaining portion of the day until 24:00. If at a given moment, for a given base radio station, the expected average power transmitted for the whole day (00:00 to 24:00) is higher than the maximum permitted threshold, the method involves intervening on the base radio station in question by limiting its transmissible power for the remaining period of the day (until 24:00) in order to ensure that the power transmitted in the whole day (00:00 to 24:00) respects the maximum permitted threshold value. The power limitation of a base radio station is constantly adjusted by the method during the course of the day according to the actual trend of traffic and power transmitted and remains active until the Power Watcher algorithm determines that the average transmitted power for the whole day (00:00 to 24:00) no longer exceeds the permitted threshold value, and in any case until 24:00.

Advantageously, the method of the present invention is an aid to the traditional process of verifying the daily transmitted power of a base radio station supporting the mobile operator:

- in preventing base radio stations from exceeding their daily transmitted power;
- in compliance with current legislation on electromagnetic fields, thus avoiding exposing the mobile operator to possible sanctions;
- in reducing the operational load of adjusting the configuration of the power transmitted by the base radio stations.

**Claims**

1. Method for controlling the average power transmitted by a base radio station of a mobile network, comprising the steps of:

   a) acquiring and processing the power value actually transmitted by the base radio station (Ptxavg_24hour_trasmitted) and data relative to the base radio station traffic, both of them in a plurality of time instants throughout each elapsed day, to generate and store historical data;
   b) providing a maximum threshold value of daily average power (P24_threshold) transmittable by the base radio station;
   c) providing a Power Watcher algorithm allowing to control the transmitted average power;
   d) using the Power Watcher algorithm to detect the average power value actually transmitted by the base radio station (Ptxavg_24ore_transmitted) in real time from the time instant at the beginning of the current day;
   e) processing by the Power Watcher algorithm historical data and the average power value actually transmitted by the base radio station (Ptxavg_24hour_trasmitted) in real time, to calculate an estimated average power value which will be transmitted by the base radio station during the rest of the day (Ptx_estimated) according to the trend of historical data, the rest of the day comprising the time period between the present instant of real time detection and the end of the current day at 24:00;
   f) calculating by means of the Power Watcher algorithm the average power actually transmitted by the base radio station (Ptxavg_24ore_trasmitted) up to the time of real time detection;
   g) limiting by the Power Watcher algorithm the power transmitted by the base radio station during the rest of the day when the sum of the estimated average power value which will be transmitted by the base radio station during the rest of the day (Ptx_estimated) with the average power value actually transmitted by the base radio station (Ptxavg_24hour_trasmitted) until the real-time detection time instant overcomes the maximum threshold value of daily average power (P24_threshold).

2. Method for controlling the average power transmitted by a base radio station of a mobile network according to claim 1, wherein step g) of limiting by the Power Watcher algorithm the power transmitted by the base radio station during the rest of the day comprises the sub-step of;

   - limiting the power transmitted by the base radio station during the rest of the day so that the maximum threshold value of daily average power (P24_threshold) during the rest of the day, after the real-time detection time instant, is not overcome.

3. Method for controlling the average power transmitted by a base radio station of a mobile network according to claim 2, wherein

   - step d) of detecting by the Power Watcher algorithm the average power value actually transmitted by the base radio station (Ptxavg_24hour_transmitted) in real time, comprises the sub-step of detecting the traffic of the base radio station in real time;
   - step e) of processing by the Power Watcher algorithm historical data and the average power value actually transmitted by the base radio station (Ptxavg_24hour_trasmitted) in real time, comprises the sub-step of also processing data relative to the base radio station traffic detected in real time to calculate the estimated average power value which will be transmitted by the base radio station during the rest of the day (Ptx _estimated) also according to the traffic of the base radio station in real time.

4. Method for controlling the average power transmitted by a base radio station of a mobile network according to any one of the preceding claims, comprising the step of:
   h) leaving unchanged by the Power Watcher algorithm the power transmitted by the base radio station when the sum of the estimated value of the average power which will be transmitted by the base radio station during the rest of the day (Ptx_estimated) with the value of the average power actually transmitted by the base radio station (Ptxavg_24hour_trasmitted) until the real-time detection time instant is lower than the maximum threshold value of daily average power (P24_threshold).

5. Method for controlling the average power transmitted by a base radio station of a mobile network according to any one of the preceding claims, comprising the step of:
   i) leaving unchanged by the Power Watcher algorithm the power transmitted by the base radio station when the sum of the estimated average power value which will be transmitted to the base radio station during the rest of the day (Ptx _estimated) with the average power value actually transmitted by the base radio station (Ptxavg_24hour_trasmitted) until the real-time detection time instant is equal to the maximum threshold value of daily average power (P24_threshold).

6. Method for controlling the average power transmitted by a base radio station of a mobile network according to claim 5, comprising the step of:
l)repeating recursively steps d) to i).

7. Method for controlling the average power transmitted by a base radio station of a mobile network according to claim 5 or 6, comprising the step of:

- repeating step i) until the end of the day.

8. Method for controlling the average power transmitted by a base radio station of a mobile network according to any one of the preceding claims, comprising the step of:
m) reducing to zero the average power value actually transmitted by the base radio station (Ptxavg_24hour_trasmitted) at the beginning of each day.

9. Method for controlling the average power transmitted by a base radio station of a mobile network according to any one of the preceding claims, comprising the step of:

- providing a value of instantaneous maximum power transmittable by the base radio station (Ptxmax_conf);
- limiting by the Power Watcher algorithm the power transmitted instantaneously by the base radio station if the average power value actually transmitted by the base radio station (Ptxavg_24hour_trasmitted) in real time is greater than or equal to the value of the instantaneous maximum power transmittable by the base radio station (Ptxmax_conf).

10. Method for controlling the average power transmitted by a base radio station of a mobile network according to any one of the preceding claims, wherein:

- the Power Watcher algorithm employs artificial intelligence techniques.

**Patentansprüche**

1. Verfahren zum Steuern der durchschnittlichen Leistung, die von einer Basisfunkstation eines Mobilfunknetzes übertragen wird, umfassend die folgenden Schritte:

a) Erheben und Verarbeiten des tatsächlich von der Basisfunkstation übertragenen Leistungswerts (Ptxavg_24hour_trasmitted) und von Daten in Bezug auf den Basisfunkstationsverkehr, beide in einer Vielzahl von Zeitpunkten während jedes verstrichenen Tages, um historische Daten zu erzeugen und zu speichern;
b) Bereitstellen eines maximalen Schwellenwerts der täglichen Durchschnittsleistung (P24_threshold), der von der Basisfunkstation übertragbar ist;
c) Bereitstellen eines Power-Watcher-Algorithmus, der es erlaubt, die übertragene Durchschnittsleistung zu steuern;
d) Verwenden des Power-Watcher-Algorithmus, um den von der Basisfunkstation (Ptxavg_24ore_transmitted) tatsächlich übertragenen durchschnittlichen Leistungswert in Echtzeit ab dem Zeitpunkt zu Beginn des aktuellen Tages zu erfassen;
e) Verarbeiten historischer Daten und des tatsächlich von der Basisfunkstation übertragenen durchschnittlichen Leistungswerts (Ptxavg_24hour_trasmitted) in Echtzeit durch den Power-Watcher-Algorithmus, um einen geschätzten durchschnittlichen Leistungswert zu berechnen, der von der Basisfunkstation während des Rests des Tages (Ptx_estimated) gemäß dem Trend der historischen Daten übertragen wird, wobei der Rest des Tages den Zeitraum zwischen dem aktuellen Zeitpunkt der Echtzeiterfassung und dem Ende des aktuellen Tages um 24:00 Uhr umfasst;
f) Berechnen der von der Basisfunkstation (Ptxavg_24ore_trasmitted) bis zum Zeitpunkt der Echtzeiterfassung tatsächlich übertragenen Durchschnittsleistung mittels des Power-Watcher-Algorithmus;
g) Begrenzen durch den Power-Watcher-Algorithmus der Leistung, die von der Basisfunkstation während des Rests des Tages übertragen wird, wenn die Summe des geschätzten durchschnittlichen Leistungswerts, der von der Basisfunkstation während des Rests des Tages übertragen wird (Ptx _estimated), mit dem durchschnittlichen Leistungswert, der tatsächlich von der Basisfunkstation übertragen wird (Ptxavg_24hour_trasmitted), bis der Echtzeiterfassungszeitpunkt den maximalen Schwellenwert der täglichen durchschnittlichen Leistung (P24_threshold) überschreitet.

2. Verfahren zum Steuern der durchschnittlichen Leistung, die durch eine Basisfunkstation eines Mobilfunknetzes übertragen wird, nach Anspruch 1, wobei Schritt g) des Begrenzens der Leistung, die durch die Basisfunkstation während des Rests des Tages übertragen wird, durch den Power-Watcher-Algorithmus den Unterschritt umfasst:

- Begrenzen der Leistung, die von der Basisfunkstation während des Rests des Tages übertragen wird, so dass der maximale Schwellenwert der täglichen Durchschnittsleistung (P24_threshold) während des Rests des Tages nach dem Echtzeiterfassungszeitpunkt nicht überwunden wird.

3. Verfahren zum Steuern der von einer Basisfunkstation eines Mobilfunknetzes übertragenen mittleren Leistung nach Anspruch 2, wobei

- Schritt d) des Erfassens des tatsächlich von der Basisfunkstation übertragenen durchschnittlichen Leistungswerts (Ptxavg_24hour_transmitted) durch den Power Watcher-Algorithmus in Echtzeit den Teilschritt des Erfassens des Verkehrs der Basisfunkstation in Echtzeit umfasst;
- Schritt e) des Verarbeitens durch den Power-Watcher-Algorithmus historischer Daten und des tatsächlich von der Basisfunkstation übertragenen durchschnittlichen Leistungswerts (Ptxavg_24hour_trasmitted) in Echtzeit den Teilschritt des Verarbeitens von Daten in Bezug auf den in Echtzeit erfassten Verkehr der Basisfunkstation umfasst, um den geschätzten durchschnittlichen Leistungswert zu berechnen, der von der Basisfunkstation während des restlichen Tages (Ptx_estimated) auch gemäß dem Verkehr der Basisfunkstation in Echtzeit übertragen wird.

4. Verfahren zum Steuern der durchschnittlichen Leistung, die von einer Basisfunkstation eines Mobilfunknetzes übertragen wird, nach einem der vorstehenden Ansprüche, umfassend den Schritt:
h) des Unverändertlassens durch den Power-Watcher-Algorithmus der von der Basisfunkstation übertragene Leistung, wenn die Summe des geschätzten Wertes der durchschnittlichen Leistung, die von der Basisfunkstation während des restlichen Tages übertragen wird (Ptx _estimated), mit dem Wert der durchschnittlichen Leistung, die tatsächlich von der Basisfunkstation übertragen wird (Ptxavg_24hour_trasmitted), bis der Echtzeiterfassungszeitpunkt niedriger ist als der maximale Schwellenwert der täglichen durchschnittlichen Leistung (P24_threshold).

5. Verfahren zum Steuern der durchschnittlichen Leistung, die von einer Basisfunkstation eines Mobilfunknetzes übertragen wird, nach einem der vorstehenden Ansprüche, umfassend den Schritt:
i) des Unverändertlassens durch den Power-Watcher-Algorithmus der von der Basisfunkstation übertragene Leistung, wenn die Summe des geschätzten durchschnittlichen Leistungswerts, der während des restlichen Tages (Ptx_estimated) an die Basisfunkstation übertragen wird, mit dem tatsächlich von der Basisfunkstation übertragenen durchschnittlichen Leistungswert (Ptxavg_24hour_trasmitted) bis zum Echtzeiterfassungszeitpunkt gleich dem maximalen Schwellenwert der täglichen durchschnittlichen Leistung (P24_threshold) ist.

6. Verfahren zum Steuern der durchschnittlichen Leistung, die von einer Basisfunkstation eines Mobilfunknetzes übertragen wird, nach Anspruch 5, umfassend den Schritt:
l) des rekursiven Wiederholens der Schritte d) bis i).

7. Verfahren zum Steuern der durchschnittlichen Leistung, die von einer Basisfunkstation eines Mobilfunknetzes übertragen wird, nach Anspruch 5 oder 6, umfassend den Schritt:

- Wiederholen von Schritt i) bis zum Ende des Tages.

8. Verfahren zum Steuern der durchschnittlichen Leistung, die von einer Basisfunkstation eines Mobilfunknetzes übertragen wird, nach einem der vorstehenden Ansprüche, umfassend den Schritt:
m) Reduzieren des tatsächlich von der Basisfunkstation übertragenen durchschnittlichen Leistungswerts (Ptxavg_24hour_trasmitted) zu Beginn eines jeden Tages auf Null.

9. Verfahren zum Steuern der durchschnittlichen Leistung, die von einer Basisfunkstation eines Mobilfunknetzes übertragen wird, nach einem der vorstehenden Ansprüche, umfassend den Schritt:

- Bereitstellen eines Werts der momentanen maximalen Leistung, die von der Basisfunkstation übertragbar ist (Ptxmax_conf);
- Begrenzen der von der Basisfunkstation augenblicklich übertragenen Leistung durch den Power-Watcher-Algorithmus, wenn der durchschnittliche Leistungswert, der tatsächlich von der Basisfunkstation (Ptxavg_24hour_trasmitted) in Echtzeit übertragen wird, größer oder gleich dem Wert der augenblicklichen maximalen Leistung ist, die von der Basisfunkstation übertragen werden kann (Ptxmax_conf).

**10.** Verfahren zum Steuern der durchschnittlichen Leistung, die von einer Basisfunkstation eines Mobilfunknetzes übertragen wird, nach einem der vorstehenden Ansprüche, wobei:

- der Power Watcher-Algorithmus Techniken der künstlichen Intelligenz einsetzt.

## Revendications

**1.** Procédé de commande de la puissance moyenne transmise par une station de base radio d'un réseau mobile, comprenant les étapes consistant à :

a) acquérir et traiter la valeur de puissance effectivement transmise par la station de base radio (Ptxavg_24hour_trasmitted) et les données relatives au trafic de la station de base radio, toutes deux en une pluralité d'instants tout au long de chaque journée écoulée, pour générer et stocker des données historiques ;
b) fournir une valeur seuil maximale de puissance moyenne quotidienne (P24_threshold) transmissible par la station de base radio ;
c) fournir un algorithme Power Watcher permettant de commander la puissance moyenne transmise ;
d) utiliser l'algorithme Power Watcher pour détecter la valeur de puissance moyenne effectivement transmise par la station de base radio (Ptxavg_24ore_transmitted) en temps réel à partir de l'instant au début de la journée en cours ;
e) traiter par l'algorithme Power Watcher des données historiques et la valeur de puissance moyenne effectivement transmise par la station de base radio (Ptxavg_24hour_trasmitted) en temps réel, pour calculer une valeur de puissance moyenne estimée qui sera transmise par la station de base radio pendant le reste de la journée (Ptx_estimated) en fonction de la tendance des données historiques, le reste de la journée comprenant la période de temps entre l'instant présent de détection en temps réel et la fin de la journée en cours à 24h00 ;
f) calculer au moyen de l'algorithme Power Watcher la puissance moyenne effectivement transmise par la station de base radio (Ptxavg_24ore_trasmitted) jusqu'au moment de la détection en temps réel ;
g) limiter par l'algorithme Power Watcher la puissance transmise par la station de base radio pendant le reste de la journée lorsque la somme de la valeur de puissance moyenne estimée qui sera transmise par la station de base radio pendant le reste de la journée (Ptx_estimated) avec la valeur de puissance moyenne effectivement transmise par la station de base radio (Ptxavg_24hour_transmitted) jusqu'à l'instant de détection en temps réel dépasse la valeur seuil maximale de la puissance moyenne quotidienne (P24_threshold).

**2.** Procédé de commande de la puissance moyenne transmise par une station de base radio d'un réseau mobile selon la revendication 1, dans lequel l'étape g) de limitation par l'algorithme Power Watcher de la puissance transmise par la station de base radio pendant le reste de la journée comprend la sous-étape consistant à :

- limiter la puissance transmise par la station de base radio pendant le reste de la journée de manière à ce que la valeur seuil maximale de la puissance moyenne quotidienne (P24_threshold) pendant le reste de la journée, après l'instant de détection en temps réel, ne soit pas dépassée.

**3.** Procédé de commande de la puissance moyenne transmise par une station de base radio d'un réseau mobile selon la revendication 2, dans lequel

- l'étape d) de détection par l'algorithme Power Watcher de la valeur de puissance moyenne effectivement transmise par la station de base radio (Ptxavg_24hour_transmitted) en temps réel comprend la sous-étape consistant à détecter le trafic de la station de base radio en temps réel ;
- l'étape e) de traitement par l'algorithme Power Watcher des données historiques et de la valeur de puissance moyenne effectivement transmise par la station de base radio (Ptxavg_24hour_trasmitted) en temps réel, comprend la sous-étape consistant également à traiter des données relatives au trafic de station de base radio détecté en temps réel pour calculer la valeur de puissance moyenne estimée qui sera transmise par la station de base radio pendant le reste de la journée (Ptx_estimated) également en fonction du trafic de la station de base radio en temps réel.

4. Procédé de commande de la puissance moyenne transmise par une station de base radio d'un réseau mobile selon l'une quelconque des revendications précédentes, comprenant l'étape consistant à :
h) laisser inchangée par l'algorithme Power Watcher la puissance transmise par la station de base radio lorsque la somme de la valeur estimée de la puissance moyenne qui sera transmise par la station de base radio pendant le reste de la journée (Ptx_estimated) avec la valeur de la puissance moyenne effectivement transmise par la station de base radio (Ptxavg_24hour_trasmitted) jusqu'à l'instant de détection en temps réel soit inférieure à la valeur seuil maximale de la puissance moyenne quotidienne (P24_threshold).

5. Procédé de commande de la puissance moyenne transmise par une station de base radio d'un réseau mobile selon l'une quelconque des revendications précédentes, comprenant l'étape consistant à :
i) laisser inchangée par l'algorithme Power Watcher la puissance transmise par la station de base radio lorsque la somme de la valeur de puissance moyenne estimée qui sera transmise à la station de base radio pendant le reste de la journée (Ptx_estimated) avec la valeur de puissance moyenne effectivement transmise par la station de base radio (Ptxavg_24hour_trasmitted) jusqu'à l'instant de détection en temps réel soit égale à la valeur seuil maximale de la puissance moyenne quotidienne (P24_threshold).

6. Procédé de commande de la puissance moyenne transmise par une station de base radio d'un réseau mobile selon la revendication 5, comprenant l'étape consistant à : l) répéter de manière récursive les étapes d) à i).

7. Procédé de commande de la puissance moyenne transmise par une station de base radio d'un réseau mobile selon la revendication 5 ou 6, comprenant l'étape consistant à :

- répéter l'étape i) jusqu'à la fin de la journée.

8. Procédé de commande de la puissance moyenne transmise par une station de base radio d'un réseau mobile selon l'une quelconque des revendications précédentes, comprenant l'étape consistant à :
m) réduire à zéro la valeur de puissance moyenne effectivement transmise par la station de base radio (Ptxavg_24hour_trasmitted) au début de chaque journée.

9. Procédé de commande de la puissance moyenne transmise par une station de base radio d'un réseau mobile selon l'une quelconque des revendications précédentes, comprenant l'étape consistant à :

- fournir une valeur de puissance maximale instantanée transmissible par la station de base radio (Ptxmax_conf) ;
- limiter par l'algorithme Power Watcher la puissance transmise instantanément par la station de base radio si la valeur de puissance moyenne effectivement transmise par la station de base radio (Ptxavg_24hour_trasmitted) en temps réel est supérieure ou égale à la valeur de la puissance maximale instantanée transmissible par la station de base radio (Ptxmax_conf).

10. Procédé de commande de la puissance moyenne transmise par une station de base radio d'un réseau mobile selon l'une quelconque des revendications précédentes, dans lequel :

- l'algorithme Power Watcher emploie des techniques d'intelligence artificielle.

Fig. 1

Fig. 2

Fig. 3

Fig. 4

Fig. 5

**EP 4 057 707 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020239214 A1

- WO 2018002691 A1